# EUROPÄISCHE PATENTSCHRIFT

(11) **EP 2 407 323 B1**
(45) Veröffentlichungstag und Bekanntmachung des Hinweises auf die Patenterteilung: **03.09.2014**
(21) Anmeldenummer: 11005680.1
(22) Anmeldetag: 12.07.2011
(51) Int. Cl.: B60G 7/00, B60G 17/019, F16C 11/06, G01D 5/00, G05B 5/00

(54) **Gestänge zwischen einer Radaufhängung und einem an ein Steuergerät angeschlossenen Drehwinkesensor**
Rod between a wheel suspension and a rotation angle sensor connected to a control device
Tringlerie entre une suspension de roue et un capteur d'angle de rotation relié à un appareil de commande

(30) Priorität: 13.07.2010 DE 202010008058 U
(43) Veröffentlichungstag der Anmeldung: 18.01.2012
(73) Patentinhaber: KHT Fahrzeugteile GmbH, 41516 Grevenbroich (DE)
(72) Erfinder: Grauer, Andreas, 40667 Meerbusch (DE); Kroll, Jörg-Heiner, 41564 Kaarst (DE)
(74) Vertreter: Patentanwälte Westphal, Mussgnug & Partner

(56) Entgegenhaltungen:
- DE-A1- 4 309 226
- DE-A1- 19 522 336
- DE-B3- 10 222 891
- JP-A- 8 200 418
- JP-A- 8 210 408
- JP-A- 9 291 929
- JP-A- 10 272 707
- US-A- 2 293 582
- US-A- 3 975 038
- US-B1- 7 806 417

## Beschreibung

Die Erfindung betrifft ein Gestänge gemäß dem Oberbegriff des Anspruchs 1.

Bei einem bekannten Gestänge dieser Art ist eine z.B. gekröpfte Verbindungsstange beidseitig starr an Kugelpfannengehäusen befestigt, in die jeweils einen Schaft tragende Kugeln eingesetzt sind.

Ein in der DE 43 09 226 A1 beschriebener Fahrzeugniveaugeber enthält zwei beweglich zueinander angeordnete, miteinander verbundene Bauteile, von denen das eine Bauteil mit dem Fahrzeugchassis und das andere Bauteil mit der Radaufhängung verbunden ist. Zwischen den Bauteilen ist eine Messeinrichtung in Form eines magnetoresistiven Sensors angeordnet. Die Bauteile sind durch ein Kugelgelenk, bestehend aus einer in einer Kugelpfanne eingesetzten Kugel, miteinander verbunden, wobei der magnetoresistive Sensor im Bereich der Kugelpfanne angeordnet ist.

Der Erfindung liegt die Aufgabe zugrunde, ein Gestänge gemäß dem Oberbegriff des Anspruchs 1 so zu verbessern, dass die Herstellung des Gestänge vereinfacht wird.

Zur Lösung dieser Aufgabe dienen die Merkmale des Kennzeichens des Anspruchs 1.

Die an den Verbindungsstangenenden im wesentlichen kreisförmigen Ösen lassen sich in einfacher Weise auf die im wesentlichen rotationssymmetrischen und aus elastisch verformbaren Material bestehenden Körper aufpressen.

Bevorzugte Ausführungsformen der Erfindung sind in den Unteransprüchen behandelt.

Die Erfindung wird im folgenden an Hand der Zeichnungen näher beschrieben:
- Fig. 1: zeigt eine perspektivische Darstellung eines bekannten Gestänges,
- Fig. 2: zeigt eine Seitenansicht des erfindungsgemäßen Gestänges,
- Fig. 3: zeigt teilweise im Schnitt eine Draufsicht auf das erfindungsgemäße Gestänge,
- Fig. 4: zeigt eine perspektivische Darstellung des Gestänges,
- Fig. 5: zeigt eine Draufsicht auf eine nicht erfindungsgemäße Form eines Gestänges,
- Fig. 6: zeigt eine Schnittansicht gemäß der Linie A - A in Fig. 5,
- Fig. 7: zeigt eine Seitenansicht des in Fig. 5 dargestellten Gestänges,
- Fig. 8: zeigt eine perspektivische Darstellung des in Fig. 5 dargestellten Gestänges,
- Fig. 9 bis 11: zeigen unterschiedliche Ausgestaltungen der erfindungsgemäß verwendeten Verbindungsstange.

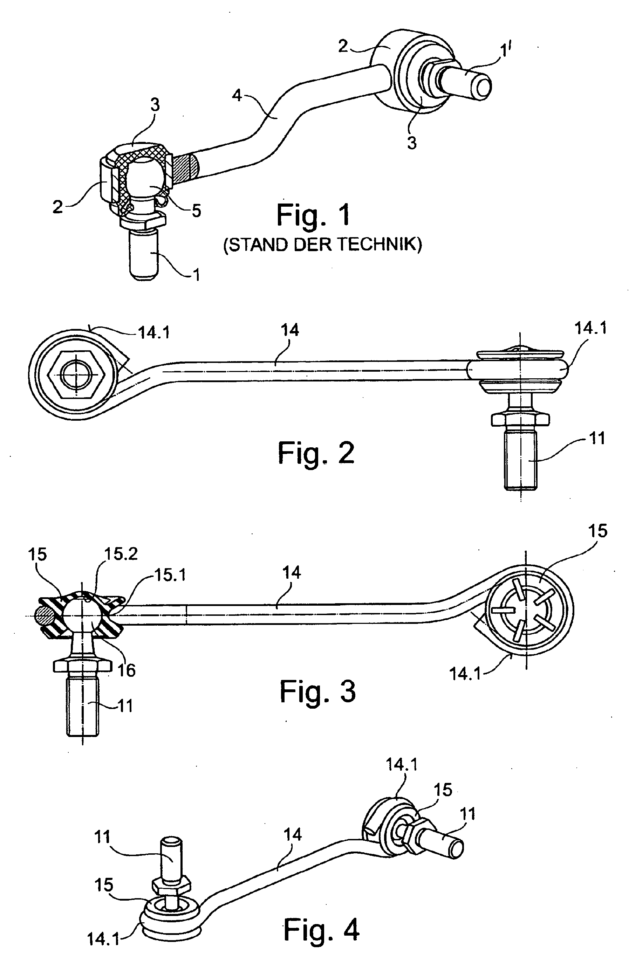

Das in Fig. 1 dargestellte Gestänge enthält eine im wesentlichen zylindrische Verbindungsstange 4, an deren Enden ringförmige Kugelpfannenträger 2 einer Kugelpfanne 3 befestigt sind, in die jeweils eine Kugel 5 eingesetzt ist. An diesen Kugeln sind Schäfte 1 bzw. 1' angebracht, von denen der Schaft 1 beispielsweise zum Anschließen einer im bzw. am Fahrgestell befestigten Drehwinkelsensor dient, während der Schaft 1' zur Befestigung im Bereich der Radaufhängung dient.

Bei dem in Fig. 2 dargestellten erfindungsgemäßen Gestänge ist die zylindrische Verbindungsstange 14 an ihren Enden zu im wesentlichen kreisförmigen Ösen 14.1 gebogen, die auf rotationssymmetrische Körper 15 aus elastisch verformbaren Material aufgepresst sind. Jeder Körper 15 ist an seiner Außenseite mit einer Umfangsnut 15.1 versehen, in der jeweils eine Öse 14.1 drehbeweglich aufgenommen sind. Jeder Körper 15 ist mit einer eine Kugelpfanne 15.2 bildenden Ausnehmung versehen, in die eine Kugel 16 drehbeweglich eingesetzt ist, die einen Schaft 11 entweder zur Befestigung an der Radaufhängung oder an dem Drehwinkelsensor trägt. Der Körper 15 besteht aus elastisch verformbaren Material, vorzugsweise einem silikonartigen Material.

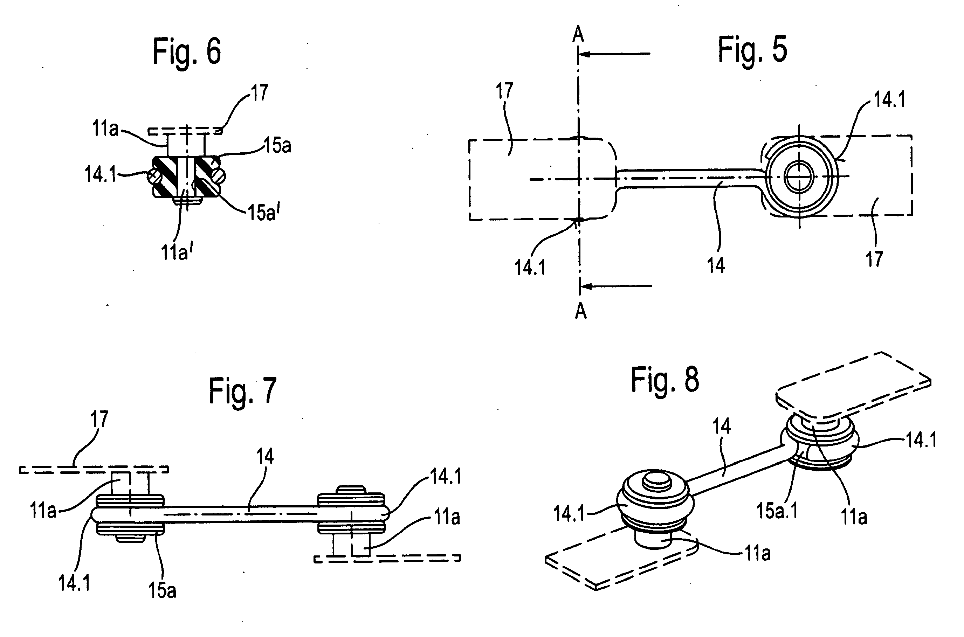

Die in den Figuren 6 bis 8 dargestellte nicht erfindungsgemäße Ausführungsform eines Gestänges unterscheidet sich von der Ausführungsform gemäß den Figuren 2 bis 4 dadurch, dass der rotationssymmetrische, aus elastisch verformbaren Material bestehende Körper 15a mit einer axial verlaufenden Bohrung zur Lagerung des den Zapfen 11a tragenden Stiftes 11a' versehen ist. Der Körper 15a ist an seinem Außenumfang mit einer eine Öse 14.1 aufnehmenden Umfangsnut 15a1 versehen.

Der Zapfen 11a kann beispielsweise durch Stumpfschweißen an einer Halterung 17 befestigt sein, die repräsentativ entweder eine Radaufhängung oder einen Drehwinkelsensor darstellt.

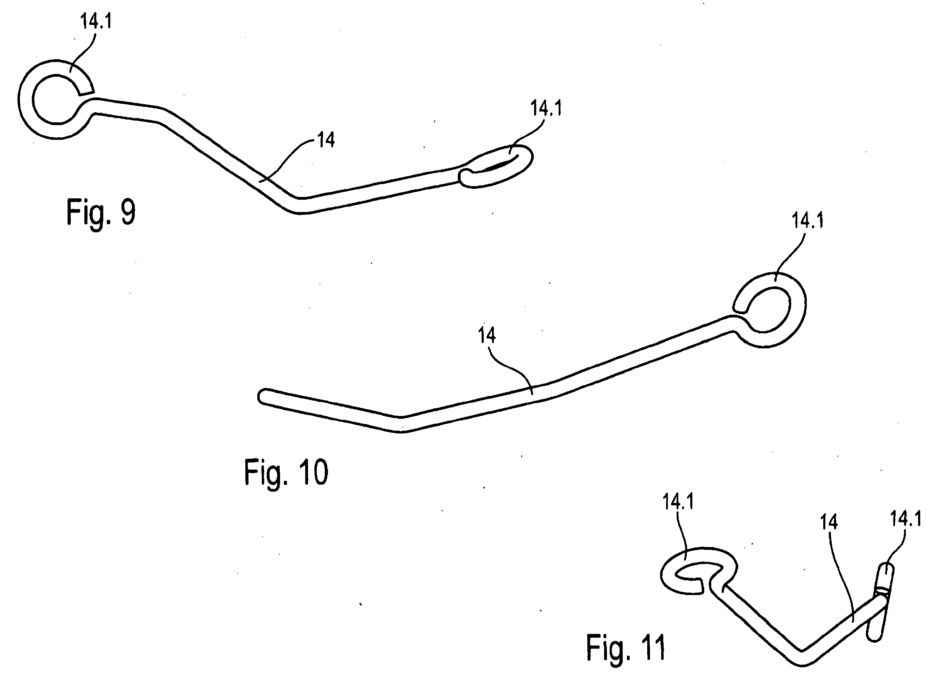

Die Figuren 9 bis 11 zeigen in beispielhafter Weise unterschiedlich gebogene Verbindungsstangen 14, wodurch eine bei der Herstellung des erfindungsgemäßen Gestänges einfache Anpassung an unterschiedliche Positionen der durch das Gestänge miteinander zu verbindenden Fahrzeugelemente möglich ist.

### Bezugszeichenliste

- 1: Schaft
- 1': Schaft
- 2: Kugelpfannenträger
- 3: Kugelpfanne
- 4: Verbindungsstange
- 5: Kugel

- 11: Schaft
- 11a: Zapfen
- 11a': Stift

- 14: Verbindungs-Stange
- 14.1: Öse

- 15: elastischer rotationssymmetrischer Körper
- 15.1: Umfangsnut
- 15.2: Kugelpfanne

- 15a: elastischer rotationssymmetrischer Körper
- 15a': Bohrung
- 15a.1: Umfangsnut

- 16: Kugel
- 17: Halterung

## Patentansprüche

1. Gestänge zwischen einer die Ein- oder Ausfederung eines Kraftfahrzeugrades aufnehmenden, am Fahrgestell eines Kraftfahrzeuges befestigten Radaufhängung und einem an ein Steuergerät angeschlossenen Drehwinkelsensor, bestehend aus einer Verbindungsstange (4, 14), an deren Enden Schäfte (1, 1') schwenkbar befestigt sind, wobei an den Enden der Verbindungsstange (4, 14) ringförmige Kugelpfannenträger (2, 14.1) einer Kugelpfanne (3, 15) befestigt sind, von denen der eine Schaft an der Radaufhängung und der andere Schaft an dem Drehwinkelsensor angeschlossen sind,
**dadurch gekennzeichnet, dass**
die Verbindungsstange (14) an ihren Enden zu im wesentlichen kreisförmigen Ösen gebogen ist, die auf einen als Kugelpfanne ausgebildeten, den Schaft (11) tragenden, im wesentlichen rotationssymmetrischen Körper (15) aus elastisch verformbarem Material aufgepresst sind, und dass jeder rotationssymmetrische Körper (15) an seiner Außenseite mit einer eine Öse (14.1) aufnehmenden Umfangsnut (15.1) versehen ist, und wobei jeder Körper (15) an seiner Außenseite mit der in einer Zentrumsebene liegenden, die Öse (14.1) drehbeweglich aufnehmenden Umfangsnut (15.1) versehen ist, und dass das Zentrum der eingesetzten Kugel (16) ebenfalls in der Zentrumsebene liegt.

2. Gestänge nach Anspruch 1, **dadurch gekennzeichnet, dass** die Verbindungsstange (14) einen zylindrischen Querschnitt hat.

3. Gestänge nach Anspruch 1, **dadurch gekennzeichnet, dass** jeder rotationssymmetrische Körper (15) aus Silikonmaterial besteht.

4. Gestänge nach einem der Ansprüche 1 bis 3, **dadurch gekennzeichnet**, dasss der rotationssymmetrische Körper (15) die Form eines Kugelpfannengehäuses hat, in dessen Kugelpfanne eine einen Schaft (11) tragende Kugel (16) eingepasst ist.

## Claims

1. Linkage between a wheel suspension, secured to the chassis of a motor vehicle and accommodating the compression and extension of the springs of a motor vehicle wheel, and a rotation sensor connected to a controller, consisting of a connecting rod (4, 14), at the ends of which shafts (1, 1') are pivoted, wherein annular ball cup holders (2, 14.1) of a ball cup (3, 15) are fastened to the ends of the connecting rod (4, 14), of which one shaft is connected to the wheel suspension and the other shaft to the rotation sensor,
**characterized in that**
the connecting rod (14) is curved at its ends into essentially circular eyelets, which are press-fitted onto an essentially rotationally symmetrical body (15) of elastically deformable material, which is configured as a ball cup and bears the shaft (11), and each rotationally symmetrical body (15) is provided on its outer side with a circumferential groove (15.1) which receives an eyelet (14.1), and wherein each body (15) is provided on its outer side with the circumferential groove (15.1), lying in a central plane and receiving the eyelet (14.1) in rotationally movable manner, and the center of the inserted ball (16) also lies in the central plane.

2. Linkage according to claim 1, **characterized in that** the connecting rod (14) has a cylindrical cross section.

3. Linkage according to claim 1, **characterized in that** each rotationally symmetrical body (15) consists of silicone material.

4. Linkage according to one of claims 1 to 3, **characterized in that** the rotationally symmetrical body (15) has the shape of a ball cup housing, in whose ball cup is press-fitted a ball (16) bearing a shaft (11).

## Revendications

1. Tringle entre une suspension de roue fixée au châssis d'un véhicule automobile absorbant la déviation et le débattement d'une roue de véhicule automobile et un capteur d'angle de rotation relié à l'appareil de commande, composée d'un embiellage (4, 14) aux extrémités duquel des tiges (1, 1') sont fixées pivotantes, des supports en forme d'anneaux (2, 14.1) d'un coussinet sphérique (3, 15) étant fixés aux extrémités de l'embiellage (4, 14), et auxquels sont reliées ladite tige attachée à la suspension de roue et l'autre tige attachée au capteur d'angle de rotation,
**caractérisée en ce que**
l'embiellage (14) est arqué en des oeillets essentiellement ronds pressés contre un corps (15) pratiquement symétrique en rotation, en forme de coussinet sphérique et portant la tige (11), composé de matériau déformable ; et que chaque corps symétrique en rotation (15) est pourvu, de son côté externe, d'une rainure périphérique (15.1) pour accueillir un oeillet (14.1), et chaque corps (15) étant pourvu de son côté externe de la rainure périphérique (15.1) située dans la zone centrale et accueillant l'oeillet (14.1) de façon à pouvoir exécuter un mouvement rotatif ; et que le centre de la sphère (16) utilisée est également situé dans la zone centrale.

2. Tringle selon la revendication 1, **caractérisée en ce que** l'embiellage (14) est pourvu d'une section transversale cylindrique.

3. Tringle selon la revendication 1, **caractérisée en ce que** chaque corps symétrique en rotation (15) est composé de matière silicone.

4. Tringle selon l'une des revendications 1 à 3, **caractérisée en ce que** le corps symétrique en rotation (15) a la forme d'un boîtier de coussinet sphérique dans le coussinet sphérique duquel est ajustée une sphère (16) portant une tige (11).
